# EUROPÄISCHE PATENTSCHRIFT

(11) **EP 0 884 834 B1**
(45) Veröffentlichungstag und Bekanntmachung des Hinweises auf die Patenterteilung: **27.02.2008**
(21) Anmeldenummer: 98109873.4
(22) Anmeldetag: 29.05.1998
(51) Int. Cl.: H02P 21/00

(54) **Verfahren und Vorrichtung zur Stromregelung einer feldorientiert betriebenen, permanenterregten Synchronmaschine mit trapezförmiger EMK**
Method and apparatus for current control of a permanent magnet field oriented controlled synchronmotor with trapezoidal e.m.f
Procédé et dispositif pour la régulation de courant d'un moteur synchrone à aimant permanent et à f.e.m. trapézoidale et commandé par champ orienté

(30) Priorität: 13.06.1997 DE 19725136
(43) Veröffentlichungstag der Anmeldung: 16.12.1998
(73) Patentinhaber: SIEMENS AKTIENGESELLSCHAFT, 80333 München (DE)
(72) Erfinder: Birk, Gunther, Dipl.-Ing. (TH), 91054 Erlangen (DE); Holl, Eugen, Dipl.-Ing. (FH), 90579 Langenzenn (DE); Neumann, Günter, Dr., 91336 Heroldsbach (DE); Tölle, Hans-Jürgen, Dipl.-Ing. (TH), 90419 Nürnberg (DE)

(56) Entgegenhaltungen:
- WO-A-95/03649
- WO-A-95/26072
- DE-A- 4 233 804
- PATENT ABSTRACTS OF JAPAN vol. 008, no. 217 (E-270), 4. Oktober 1984 & JP 59 099994 A (FUJI DENKI SEIZO KK), 8. Juni 1984
- PATENT ABSTRACTS OF JAPAN vol. 010, no. 197 (E-418), 10. Juli 1986 & JP 61 039885 A (YASKAWA ELECTRIC MFG CO LTD), 26. Februar 1986

## Beschreibung

Die Erfindung bezieht sich auf ein Verfahren und eine Vorrichtung zur Stromregelung einer feldorientiert betriebenen, permanenterregten Synchronmaschine mit trapezförmiger EMK.

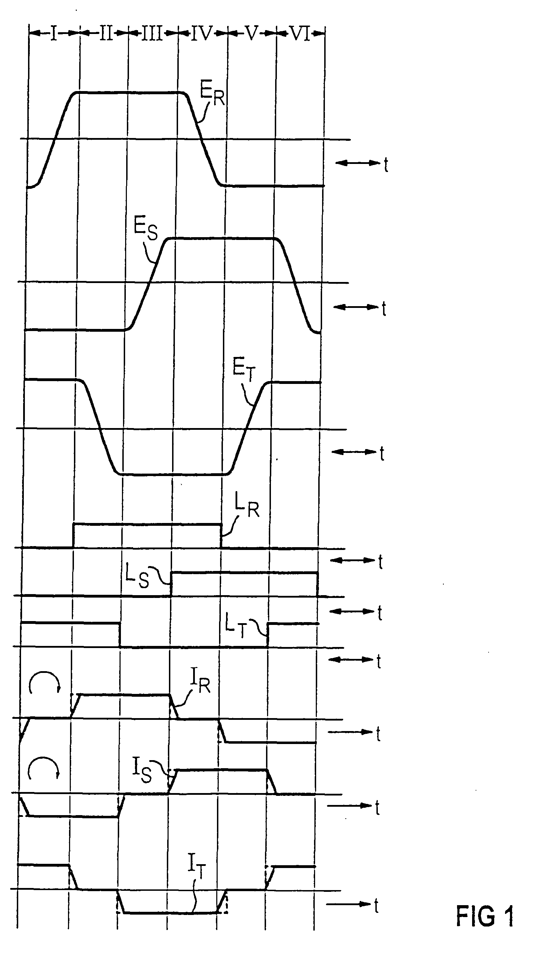

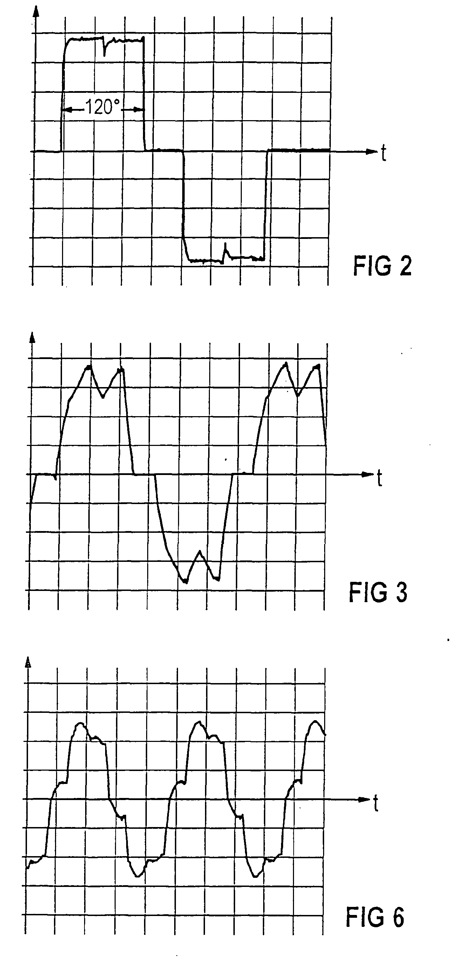

Die permanenterregte Synchronmaschine mit trapezförmiger EMK hat den Vorteil gegenüber einer Synchronmaschine mit sinusförmiger EMK, daß das Drehmoment bei gleichem Scheitelwert des Stromes und Blockstrom um ca. 10% größer ist als bei sinusförmiger EMK und Sinusstrom. Deshalb wird die permanenterregte Synchronmaschine mit trapezförmiger EMK im gesamten Drehzahlbereich mit Blockstrom betrieben. Bei Blockstromspeisung ist immer in einer Phase der Synchronmaschine der Strom für 60° el. Null. Die Figur 1 zeigt in einem Diagramm jeweils über der Zeit t die trapezförmigen EMK-Verläufe E_{R}, E_{S}, E_{T}, die Lagesignale L_{R}, L_{S}, L_{T} und die Phasenströme I_{R}, I_{S}, I_{T}. Im niedrigen Drehzahlbereich ist dies, bedingt durch die geringe Amplitude der EMK und der Ständerfrequenz, auch problemlos möglich. Da jedoch der Strom i_{R} bzw. i_{S} nicht mit einer unendlichen Steigung der Anstiegsflanke einer der Phasen R bzw. S zu fließen beginnt, sondern eine endliche Steigerung aufweist, wird durch diesen Kommutierungsverlauf in den an der Kommutierung nichtbeteiligten Phase ein Stromeinbruch verursacht. Ein derartiger Verlauf eines Phasenstromes ist in der Figur 2 in einem Diagramm über die Zeit t dargestellt. Im höheren Drehzahlbereich, d.h., bei einer Drehzahl größer 20% der Nenndrehzahl, ist jedoch die Gegenspannung der Synchronmaschine (EMK) und die Ständerfrequenz so groß, daß der ideale Stromblock von 120° el. gemäß Figur 2 nicht mehr realisiert werden kann. Das heißt, die Stromeinbrüche, bedingt durch die Kommutierung in den beiden anderen Phasen, werden immer größer. Außerdem verändern sich die Flanken der Stromblöcke, so daß der Stromblock einer Phase den in der Figur 3 dargestellten Verlauf annimmt. Bedingt durch die reduzierte Breite des Stromblockes und die sich bei Blockstromspeisung einstellende Spannungsamplitude, die prinzipbedingt kleiner als die Maximalspannung des Pulswechselrichters ist, ergibt sich im höheren Drehzahlbereich ein deutlich reduziertes Drehmoment und damit auch ein schlechterer Wirkungsgrad.

Die permanenterregte Synchronmaschine mit trapezförmiger EMK wird üblicherweise im Grunddrehzahlbereich mittels einer von der Polradlage abgeleiteten Phasenstromregelung geregelt. Für eine gegebene Polradlage entspricht dieses Regelungsprinzip einer Gleichstrommaschine. Um die Kommutierungseinbrüche im Strom gering zu halten, wird der Stromregler durch eine Vorsteuerung unterstützt. Abhängig von der Polradlage wird die Spannung entsprechend der Summe aus Stromreglerausgang und Vorsteuerung mittels eines PWM-Signals in zwei Motorphasen eingestellt. Die Ansteuersignale der dritten Phase werden für diesen gesamten 60°-Stromblock gesperrt, wodurch sich die Spannung entsprechend der Stromrichtung einstellt. Im unteren Drehzahlbereich geht der Strom nach Beendigung der Kommutierung zu Null, wobei im oberen Drehzahlbereich (Feldschwächbereich) dies unter Berücksichtigung der Freilaufwirkung und der kurzen Zeit der 60°-Lücken nicht mehr der Fall ist (Figur 6). Auch bei dieser Stromregelung muß man im oberen Drehzahlbereich eine Drehmomentreduzierung akzeptieren.

Um den Drehzahlbereich einer permanenterregten Synchronmaschine mit trapezförmiger EMK zu erweitern, ist aus der WO 94/07301 ein Verfahren zur Feldschwächung bekannt. Bei diesen Verfahren wird im Feldschwächbereich der Motorstrom in Abhängigkeit eines von der Belastung der Synchronmaschine vorgebbaren Umrichtereingangstrom-Sollwertes, eines ermittelten Umrichtereingangsstrom-Istwertes und eines ermittelten Vorsteuerwinkels geregelt, wobei dieser Vorsteuerwinkel in Abhängigkeit eines eine maximale Steuergröße übersteigenden Teil eines Steuergrößen-Istwertes bestimmt wird. Mit diesem Verfahren kann eine umrichtergespeiste, permanenterregte Synchronmaschine vollkommen ruckfrei vom Grunddrehzahlbereich in den Feldschwächbereich und zurück bei allen Lastzuständen geregelt werden.

Dieses Verfahren hat den Vorteil, daß die relativ einfache Regelungsstruktur der Blockstromspeisung mit geringer Modifikation auch im Feldschwächbereich eingesetzt werden kann. Nachteilig ist jedoch, daß die Spannung in der Phase mit gesperrten Ansteuersignalen sich entsprechend im Stromfluß einstellt. Die sich einstellende Spannungsamplitude ist kleiner als die Maximalspannung des Pulswechselrichters, wodurch bei gegebenem Strom auch eine Leistungseinbuße akzeptiert werden muß.

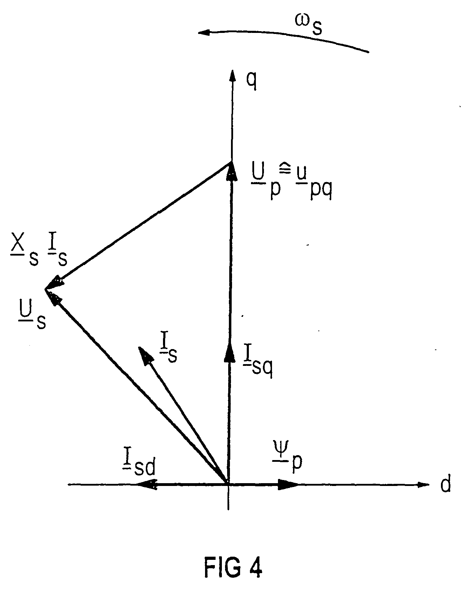

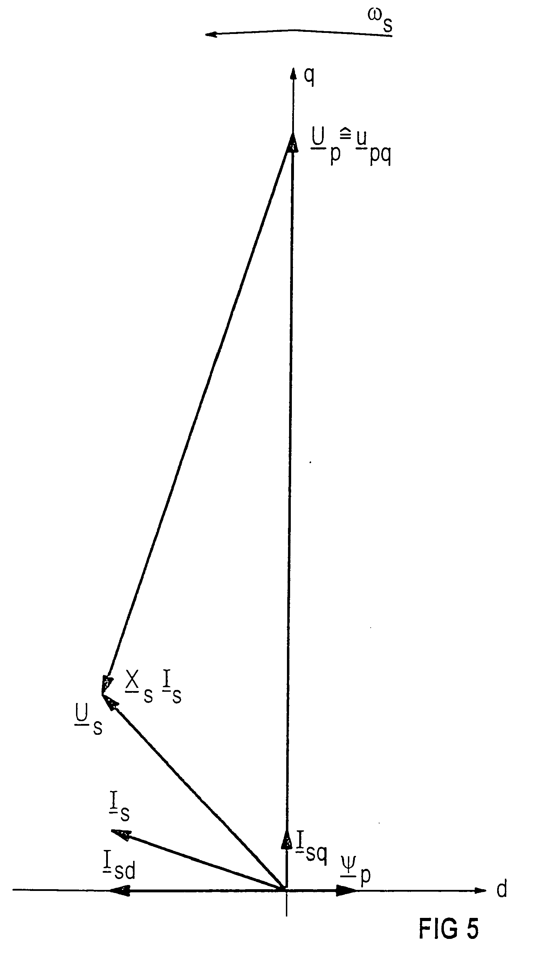

Da im Feldschwächbereich die EMK größer ist als die speisende Gleichspannung (Figur 4 bzw. Figur 5), bleibt der Strom in der gesperrten Phase nicht auf Null, sondern steigt nach dem Abkommutieren in umgekehrter Richtung wieder an (Figur 6). Dadurch leitet eine Freilaufdiode des Pulswechselrichters der permanenterregten Synchronmaschine einer gesperrten Phase und der Spannungszeiger, den der Pulswechselrichter erzeugt, durchläuft nicht die für die maximale Spannung notwendige Reihenfolge der aktiven Spannungszeiger eines Zweipunkt-Pulswechselrichters, sondern es entstehen Zwischenschritte, die die Spannungsamplitude absenken. Die Figur 4 und 5 zeigen jeweils ein Zeiger-Diagramm einer permanenterregten Synchronmaschine im Überlastbereich bei einer 1,67-fachen bzw. einer 4-fachen Nenndrehzahl. In der Figur 6 ist in einem Diagramm über der Zeit t der Verlauf eines Blockstromes einer Phase der Synchronmaschine näher dargestellt.

Aus der WO 95/03649 ist eine Zweikomponenten-Stromregelung mit einem Raumzeiger-Modulator für eine pulswechselrichtergespeiste Induktionsmaschine bekannt. Diese feldorientierte Regelung weist eine eingangsseitige Transformationseinrichtung, einen EMK-Rechner, ein Vorsteuernetzwerk, einen Stromregelkreis, eine EMK-Regelung und einen ausgangsseitigen Koordinatenwandler auf. Der eingangsseitigen Transformationseinrichtung werden jeweils zwei gemessene Phasenströme und Phasenspannungen zugeführt, aus denen mit Hilfe eines Flußwinkels kartesische feldorientierte Ist-Strom- und Ist-Spannungskomponenten generiert werden. Die Ist-Stromkomponenten werden einerseits dem Strom-Regelkreis und andererseits dem EMK-Rechner zugeführt. Diesem EMK-Rechner werden außerdem die Ist-Spannungskomponenten, die Parameter der Induktionsmaschine (Ständerwiderstand Rₛ, Streuinduktivität L_{σ}), die Ständerfrequenz ωₛ und die Polpaarzahl p zugeführt. Ausgangsseitig ist dieser EMK-Rechner mit einem Istwert-Eingang des EMK-Regelkreises verknüpft, wobei am Sollwert-Eingang dieses Regelkreises eine Soll-d-Komponente eines EMK-Raumzeigers ansteht. Das Ausgangssignal dieses EMK-Regelkreises wird als Drehzahlkorrektur zur Bestimmung der Ständerfrequenz verwendet. Der Strom-Regelkreis weist für jede feldorientierte Stromkomponente einen Vergleicher mit nachgeschaltetem Regler auf, wobei an dem invertierenden Eingängen jeweils ein Ausgangssignal der eingangsseitigen Transformationseinrichtung und an dem nichtinvertierenden Eingängen jeweils eine feldorientierte Soll-Stromkomponente anstehen. Die Ausgänge dieses StromRegelkreises sind mit den Ausgängen des Vorsteuernetzwerkes verbunden, wobei eingangsseitig diesen Vorsteuernetzwerk die Soll-Stromkomponenten, die Parameter "Ständerwiderstand", "Streuinduktivität" und "Hauptinduktivität" zugeführt sind. Das Summensignal, bestehend aus feldorientierten Vorsteuergrößen und Regler-Stellgrößen, auch als feldorientierte Stellgrößen genannt, wird dem ausgangsseitigen Koordinatenwandler zugeführt, die die kartesischen Komponenten in polare Komponenten wandelt. Diese polaren Stellgrößenkomponenten und die Ständerfrequenz werden dem Raumzeiger-Modulator zugeführt, an dessen Ausgängen Steuersignale für den Pulswechselrichter anstehen.

Aus der EP 0 633 653 A1 ist ein Stromregelverfahren und eine Vorrichtung für einen spannungseinprägenden Umrichter (Pulswechselrichter) einer Drehfeldmaschine bekannt. Gemäß diesen Verfahren werden eine flußbildende Stromkomponente und eine drehmomentbildende Stromkomponente eines ermittelten Ist-Stromvektors jeweils auf eine gewünschte Stromkomponente eines Soll-Stromvektors geregelt, wobei jeweils eine Regler-Stellgröße mit einer Vorsteuergröße addiert wird. Außerdem wirkt die drehmomentbildende Regler-Stellgröße in Abhängigkeit einer Frequenzgröße verzögert auf die flußbildende Regler-Stellgröße ein. Dies bewirkt, daß der Ausgang des Reglers in der Wirkachse nicht nur die Wirkspannung verändert (wie bei der Zweikomponenten-Stromregelung), sondern über die Änderung der Blindspannung auch eine Drehung des Spannungszeigers bewirkt (wie bei der Wirkstromregelung). Gleichzeitig läßt sich durch diesen Querzweig erreichen, daß eine Ansteuerung der Ausgangsspannung in der Wirkachse den Blindstrom nicht beeinflußt, d.h. die Regelkreise sind entkoppelt. Somit treten die für die zwei Komponenten-Stromregelungen typischen langsamen Ausgleichsvorgänge bei verstimmten Vorsteuernetzwerk nicht mehr auf. Für eine ideale Entkopplung wird die Zeitkonstante des Verzögerungsgliedes des Querzweiges gleich der Kurzschlußzeitkonstante des Motors gewählt und dessen Verstärkung proportional zur Ständerfeldfrequenz veränderbar gemacht. Dieses Stromregelverfahren verbindet die Vorteile von der Zweikomponenten-Stromregelung und der Wirkstromregelung in idealer Weise miteinander. Solange die Spannung nicht begrenzt ist, erhält man mit diesem Stromregelverfahren das gleich gute dynamische Verhalten wie mit der Zweikomponenten-Stromregelung, reagiert aber weniger empfindlich auf ein verstimmtes Vorsteuernetzwerk. Mit Erreichung der Spannungsdecke geht dieses Stromregelverfahren automatisch in das Verhalten der Wirkstromregelung über, ohne das eine Strukturumschaltung erforderlich wäre. Die Stabilität im Feldschwächbereich hat sich mit dem Stromregelverfahren gegenüber der Wirkstromregelung verbessert.

Die Zweikomponenten-Stromregelung mit EMK-Rechner gemäß der WO 95/03649 hat sich bei Asynchron- und Synchronmaschinen mit Sinusstromeinprägung bewährt.

Aus dem Stand der Technik sind ferner die Dokumente WO 9526072 A und JP 59 099994 A bekannt.

Ersteres beschreibt ein Stromregelverfahren für eine dreiphasige Stromrichtergespeiste, permanenterregte Synchronmaschine, welche ebenfalls auf Basis trapezförmiger flußbildender Strom-Istkomponenten betrieben wird.

Zweiteres geht auf die Problematik der Drehmomentreduktion durch Gegen-EMK bei höheren Drehzahlen ein, welche ein trapezförmiger Phasenstrom zur Folge hätte und wendet ab einem bestimmten Grenz-Drehzahlbereich sinusförmige Phasenströme an.

Der Erfindung liegt nun die Aufgabe zugrunde, ein Stromregelverfahren für eine feldorientiert betriebenen, permanenterregten Synchronmaschine mit trapezförmiger EMK anzugeben, bei dem im höheren Drehzahlbereich keine Drehmomentreduktion mehr auftritt ohne daß auf die Vorteile der Blockstromspeisung im niedrigen Drehzahlbereich verzichtet werden muß.

Diese Aufgabe wird erfindungsgemäß mit den Merkmalen des Anspruchs 1 gelöst.

Dieses erfindungsgemäße Stromregelverfahren ist dadurch gekennzeichnet, daß als feldorientiertes Regelverfahren das bekannte zwei Komponenten-Stromregelverfahren mit einer Raumzeiger-Modulationsverfahren vorgesehen ist, wobei in Abhängigkeit von Lagesignalen einerseits ein sich sprungförmig ändernder und andererseits ein sich stetig ändernder Flußwinkel berechnet wird, von denen in Abhängigkeit einer Grenz-Drehzahl der sprungförmig ändernde oder der stetig ändernde Flußwinkel zur Bestimmung der Steuersignale des Pulswechselrichters verwendet wird. Dabei unterteilt die Grenz-Drehzahl den Drehzahlbereich in einen niedrigen und höheren Drehzahlbereich. Im erstgenannten Drehzahlbereich ändert sich der Flußwinkel in Abhängigkeit der Lagesignale alle 60° el., so daß die permanent erregte Synchronmaschine mit einem blockförmigem Strom gespeist wird. Im zweitgenannten Drehzahlbereich ändert sich der Flußwinkel stetig, so daß nun diese permanent erregte Synchronmaschine mit einem sinusförmigen Strom gespeist wird.

Durch die unterschiedliche Ermittlung der Flußlage (sprungförmig/stetig) kann mittels des bekannten Zweikomponenten-Stromregelverfahrens eine permanenterregte Synchronmaschine mit einem blockförmigen und mit einem sinusförmigen Strom ge-speist werden. Somit werden mittels einer feldorientierten Regelungsstruktur zwei Stromregelverfahren kombiniert, die sich in Abhängigkeit einer Grenz-Drehzahl ablösen, so daß das erfindungsgemäße Stromregelverfahren einerseits die Vorteile der Blockstromspeisung und andererseits die Vorteile der Sinusspeisung aufweist.

Bei einem vorteilhaften Verfahren werden die sprungförmig ändernde Flußlage mit einer beliebigen Zeitfunktion verzögert. Dadurch wird erreicht, daß die dynamischen Störgrößen auf die Stromregler der Zweikomponenten-Stromregelung die durch die sprungförmige Änderung der Flußlage verursacht werden, reduziert werden.

Bei einem weiteren vorteilhaften Verfahren wird der ermittelten Ständerfrequenz eine Korrekturfrequenz aufgeschaltet, die in Abhängigkeit einer Ist-d-Komponente eines aus feldorientierten Strom- und Spannungskomponenten, Maschinenparametern und der Ständerfrequenz ermittelten EMK-Raumzeigers mittels einer Soll-d-Komponente bestimmt ist. Mittels dieser Korrekturfrequenz wird die Flußlage synchron zur Drehzahl verändert. Wird diese Synchronisierung nicht durchgeführt, so wird die Flußlage asynchron zur festen Polradlage verändert. Tritt bei der asynchronen Winkelveränderung zur Polradlage ein kleiner Fehler auf, so läuft die Flußlage weg, so daß eine Fehlorientierung der Synchronmaschine vorliegt.

Bei einem weiteren vorteilhaften Verfahren wird während eines übrigen Drehzahlbereichs aus der ermittelten Korrekturfrequenz mittels Integration ein Justierwinkelfehler des Polradlagegebers ermittelt, der während des niedrigen Drehzahlbereichs der sich sprungförmig ändernden Flußlage überlagert wird. Somit ist gewährleistet, daß selbst bei Fehljustierungen des Polradlagegebers beim Übergang von Blockstromspeisung zur Sinusstromspeisung das Drehmoment konstant bleibt. D.h., tritt durch Justierfehler oder Toleranzen des Polradlagegebers hervorgerufene Fehlorientierung auf, so wird ein Korrekturwinkel ermittelt, der den Stromzeiger im Blockbetrieb verdreht.

Bei einem weiteren vorteilhaften Verfahren wird bei Überschreitung der Betragskomponente der feldorientierten Stellgröße über einen Maximalwert die flußbildende Soll-Stromkomponente so vorgegeben, daß die Betragskomponente der Stellgröße gleich dem Maximalwert bleibt. Somit wird während des höheren Drehzahlbereichs die Feldschwächung bewerkstelligt. D.h., mittels einer Spannungsbegrenzungsregelung, die auf die flußbildende Soll-Stromkomponente einwirkt, wird der Drehzahlbereich erweitert.

Im Feldschwächbereich ist es vorteilhaft, wenn die drehmomentbildende Soll-Stromkomponente, die durch eine überlagerte Drehzahl-Regelung bestimmt wird, in Abhängigkeit der ermittelten flußbildenden Soll-Komponente und eines Stromgrenzwertes begrenzt wird. Dadurch wird verhindert, daß der Betrag des Stromraumzeigers den Maximalstrom des Pulswechselrichters der permanent erregten Synchronmaschine nicht überschreitet.

Bei einem weiteren vorteilhaften Verfahren werden den Regler-Stellgrößen zusätzliche dynamische Vorsteuergrößen aufaddiert, die in Abhängigkeit von der drehmomentbildenden Soll-Stromkomponente, von den Lagesignalen und der EMK ermittelt werden. Mittels dieser dynamischen Vorsteuergrößen wird die Stellgröße derart verändert, daß bei der Kommutierung eine ausreichende Spannung vorhanden ist, so daß Stromeinbrüche in der an der Kommutierung nicht beteiligten Phase vermieden werden.

Diese durch die Unteransprüche 2 bis 9 beanspruchten vorteilhaften Ausführungsformen des erfindungsgemäßen Verfahrens zur Stromregelung einer feldorientiert betriebenen, permanenterregten Synchronmaschine mit trapezförmiger EMK können beliebig miteinander kombiniert werden.

Zur weiteren Erläuterung der Erfindung wird auf die Zeichnung Bezug genommen, in der mehrere Ausführungsformen der Vorrichtung zur Durchführung des erfindungsgemäßen Stromregelverfahrens für eine feldorientiert betriebenen, permanenterregten Synchronmaschine schematisch veranschaulicht sind.
- FIG 1: zeigt in einem Diagramm die trapezförmigen EMK-Verläufe, die Lagesignale und die Phasenströme jeweils über der Zeit t, die
- FIG 2: zeigt in einem Diagramm den Verlauf eines Phasenstromes über der Zeit t im niedrigen Drehzahlbereich, wobei die
- FIG 3: diesen Stromverlauf im oberen Drehzahlbereich in einem Diagramm über der Zeit t darstellt, in der
- FIG 4: ist ein Zeigerdiagramm einer feldorientiert betriebenen, permanenterregten Synchronmaschine im Überlastbereich bei einem 1,6-fachen Nenndrehzahl, wobei die
- FIG 5: ein Zeigerdiagramm dieser Synchronmaschine im Überlastbereich bei einer 4-fachen Nenndrehzahl zeigt, in der
- FIG 6: ist in einem Diagramm der Verlauf eines Phasenstromes im Feldschwächungsbereich veranschaulicht, die
- FIG 7: zeigt ein Zeigerdiagramm dieser Synchronmaschine im Nennbetrieb, wogegen in der
- FIG 8: das Zeigerdiagramm im Nennbetrieb bei Überlast dargestellt ist, in der
- FIG 9: ist ein Blockschaltbild einer ersten vorteilhaften Ausführungsform der Vorrichtung zur Durchführung des erfindungsgemäßen Verfahrens dargestellt, in der
- FIG 10: ist ein Blockschaltbild einer zweiten vorteilhaften Ausführungsform der Vorrichtung zur Durchführung des erfindungsgemäßen Verfahrens dargestellt und die
- FIG 11: zeigt ein Blockschaltbild einer dritten vorteilhaften Ausführungsform der Vorrichtung zur Durchführung des erfindungsgemäßen Verfahrens.

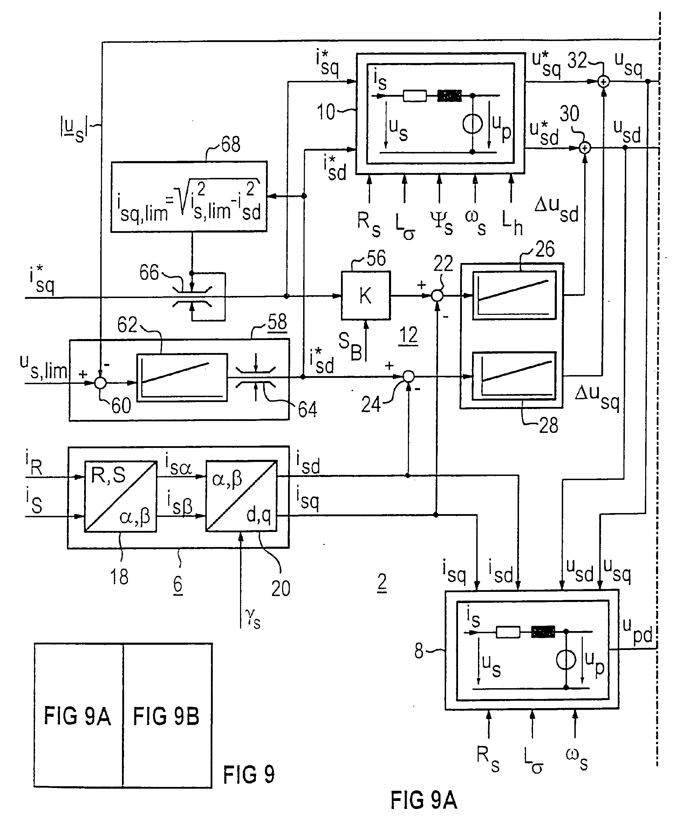

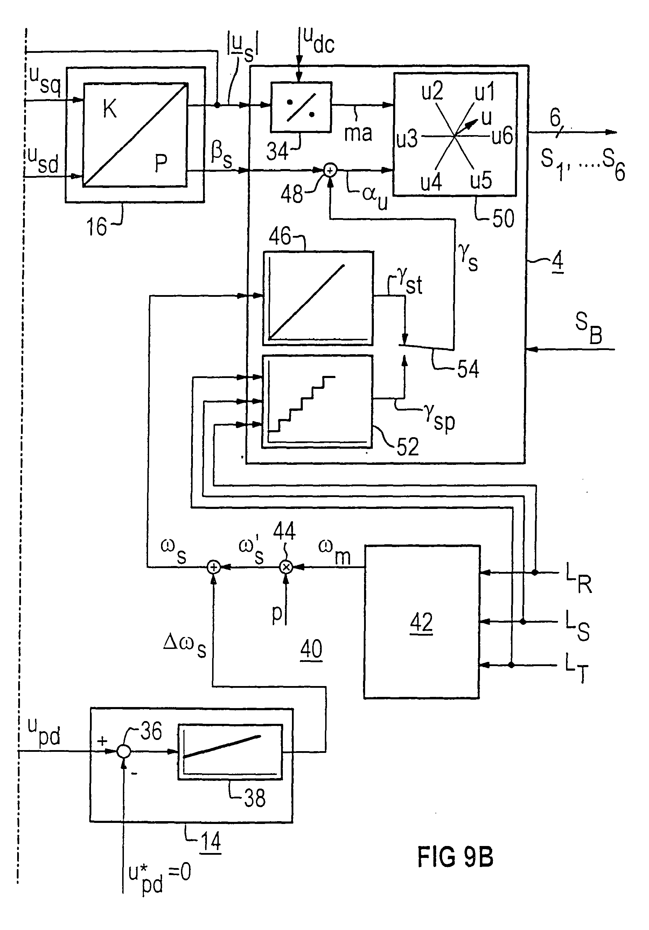

Die FIG 9 zeigt ein Blockschaltbild einer Vorrichtung zur Durchführung des erfindungsgemäßen Verfahrens zur Stromregelung einer feldorientiert betriebenen, permanenterregten Synchronmaschine mit trapezförmiger EMK. Diese Vorrichtung ist unterteilt in eine feldorientierte Regelung 2 und einen Raumzeiger-Modulator 4. Die feldorientierte Regelung 2 weist eine eingangsseitige Transformationseinrichtung 6, einen EMK-Rechner 8, ein Vorsteuernetzwerk 10, einen Stromregelkreis 12, eine EMK-Regelung 14 und einen ausgangsseitigen Koordinatenwandler 16 auf. Mittels der eingangssseitigen Transformationseinrichtung 6, die einen Koordinatenwandler 18 und einen Vektordreher 20 aufweist, und einer ermittelten Flußlage γₛ werden die gemessenen Phasenströme i_{R} und i_{S} in eine fluß- und drehmomentbildende Ist-Stromkomponente i_{sd} und i_{sq} transformiert. Diese Ist-Stromkomponenten i_{sd} und i_{sq} werden jeweils einem Vergleicher 22 und 24 des Stromregelkreises 12 zugeführt. An deren nichtinvertierenden Eingängen jeweils eine Soll-Stromkomponente i^{*}_{sd} und i^{*}_{sq} anstehen. Ausgangsseitig ist der Vergleicher 22 bzw. 24 mit einem Stromregler 26 bzw. 28 verknüpft, der ausgangsseitig mit einem Addierer 30 bzw. 32 verbunden ist. Diese Stromregler 26 und 28 werden von dem Vorsteuernetzwerk 10 dadurch unterstützt, daß dieses Netzwerk 10 in Abhängigkeit von Soll-Stromkomponenten i^{*}_{sd} und i^{*}_{sq}, von Parametern der Synchronmaschine (Ständerwiderstand R*ₛ*, Streuinduktivität L_{σ}, Hauptinduktivität Lₕ) und einer ermittelten Ständerfrequenz ω*ₛ*, Vorsteuergrößen u^{*}_{sd} und u^{*}_{sq} berechnet, die jeweils dem Addierer 30 bzw. 32 zugeführt werden. Somit müssen die Stromregler 26 und 28 an ihren Ausgängen nurmehr die Spannung Δu_{sd} und Δu_{sq}, auch als Regler-Stellgrößen bezeichnet, liefern, die vom Vorsteuernetzwerk 10 nicht ermittelt werden, beispielsweise dynamische Anteile, Fehler, etc... .

Die Ausgänge der beiden Addierer 30 und 32 werden dem ausgangsseitigen Koordinatenwandler 16 zugeführt. Mit diesem Koordinatenwandler 16 werden die kartesischen Komponenten u_{sd} und u_{sq} des Stellgrößen-Raumzeigers uₛ in polare Komponenten |uₛ| und βₛ gewandelt. Die Betragskomponente |uₛ| wird mittels eines Dividierers 34, an dessen zweiten Eingang eine Eingangsgröße u_{dc} des Pulswechselrichters ansteht, normiert. Die Ausgangsgröße mₐ ist der Aussteuerwert des Pulswechselrichters. Der Dividierer 34 ist im dargestellten Blockschaltbild ein Bauelement des Raumzeiger-Modulators 4. Die kartesischen Stellgrößenkomponenten u_{sd} und u_{sq} und die Ist-Stromkomponenten i_{sd} und i_{sq} werden dem EMK-Rechner 8 zugeführt, dem ebenfalls die Maschinenparameter Ständerwiderstand Rₛ und Streuinduktivität L_{σ} und die ermittelte Ständerfrequenz ωₛ zugeführt sind. Am Ausgang dieses EMK-Rechners 8 steht eine d-Komponente u_{pd} der Polradspannung uₚ, auch als EMK-Spannung bezeichnet, an.

Da aber per Definition die Polradspannung uₚ der Synchronmaschine immer in der q-Achse des mit Ständerfrequenz ωₛ rotierenden d-,q-Koordinatensystem liegt, muß die d-Komponente u_{pd} der Polradspannung uₚ gleich Null sein. Diese d-Komponente u_{pd} wird der EMK-Regelung 14 zugeführt, an deren zweiten Eingang die Soll-d-Komponente u^{*}_{pd} ansteht, die Null ist. Diese EMK-Regelung 14 weist einen Vergleicher 36 und einen PI-Regler 38 auf. Ist die Ist-d-Komponente u_{pd} der Polradspannung uₚ verschieden von Null, so liegt eine Fehlorientierung der Regelung 2 vor. Damit dieses Fehlorientierung behoben werden, muß die Ständerfrequenz ω*ₛ* verändert werden. Dazu erzeugt die EMK-Regelung 14 in Abhängigkeit der ermittelten Fehlorientierung eine Korrekturfrequenz Δωₛ, die einer ermittelten Ständerfrequenz ωₛ aufaddiert wird. Die Ständerfrequenz ωₛ wird mittels einer Einrichtung 40 in Abhängigkeit von Lagesignalen L_{R,S,T} und einer Polpaarzahl p der Synchronmaschine ermittelt. Diese Einrichtung 40 weist eingangsseitig eine Einrichtung 42 zur Berechnung der mechanischen Läuferfrequenz ωₘ und ausgangsseitig einen Multiplizier 44 auf. Die Einrichtung 42 berechnet in Abhängigkeit der Lagesignale L_{R,S,T} die mechanische Läuferfrequenz ωₘ, die mittels des Multiplizierers 44 mit der Polpaarzahl p der Synchronmaschine multipliziert wird. Am Ausgang dieses Multiplizierers 44 steht die Ständerfrequenz ω'ₛ an.

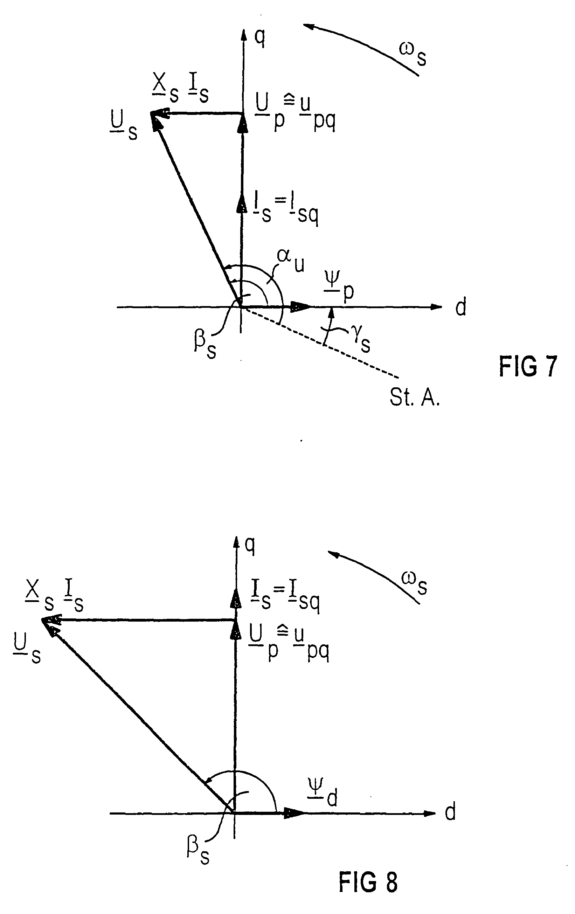

Die korrigierte Ständerfrequenz ω*ₛ* wird ebenfalls dem Raumzeiger-Modulator 4 zugeführt. Dieser Raumzeiger-Modulator 4 weist einen Winkelintegrator 46, einen Addierer 48 und eine Recheneinheit 50 auf. Mittels des Winkelintegrators 46 und der korrigierten Ständerfrequenz ω*ₛ* wird der Flußwinkel γ*ₛ* im ständerorientierten Koordinatensystem ermittelt, die zur Lage βₛ des Stellgrößen-Raumzeigers uₛ im flußorientierten Koordinatensystem addiert wird. Als Summe dieser beiden Winkel γₛ und βₛ erhält man die Lage αᵤ des Stellgrößen-Raumzeigers uₛ im ständerorientierten Koordinatensystem (FIG 7). Aus den Signalen mₐ (Aussteuerwert) und αᵤ (Lage des Stellgrößen-Raumzeigers uₛ) werden mittels der Recheneinheit 50 die Ansteuersignale S₁, ..., S₆ für den Pulswechselrichter bestimmt.

Die bisher beschriebene feldorientierte Regelung 2 ist für eine Induktionsmaschine aus der eingangs genannten WO 95/03649 bekannt. Das Regelverfahren, daß mit dieser feldorientierten Regelung 2 durchgeführt wird, ist das Zweikomponenten-Stromregelverfahren. In dieser WO 95/03649 wird auf Veröffentlichungen verwiesen, die sich auf die Recheneinheit 50 bzw. auf das Vorsteuernetzwerk 10, das auch als Entkopplungsnetzwerk bezeichnet wird, beziehen.

Damit man diese bekannte feldorientierte Regelung 2 bei einer permanenterregten Synchronmaschine im gesamten Drehzahlbereich verwenden kann, wobei auf die Vorteile der Blockstromspeisung im niedrigen Drehzahlbereich nicht verzichtet werden soll, muß für den niedrigen Drehzahlbereich diese bekannte feldorientierte Regelung 2 abgeändert werden.

Damit die gleiche feldorientierte Regelung 2 verwendet werden kann, ist der zusätzliche Raumzeiger-Modulator 4 erfindungsgemäß mit einer Vorrichtung 52 zur Ermittlung eines sich sprungförmig ändernden Flußwinkels γₛₚ und einem Umschalter 54 versehen. Der Vorrichtung 52 werden die Lagesignale L_{R,S,T} zugeführt, aus denen dann der Flußwinkel γₛₚ generiert wird. Als Vorrichtung 52 kann ein Speicher mit einer abgelegten Tabelle vorgesehen sein. Da alle 60° el. eines der Lagesignale L_{R,S,T} sich verändert, wird entsprechend der Flußwinkel γₛₚ alle 60° el. um eine Winkeländerung von 60° verändert. Diese Änderung erfolgt sprungförmig. Der so erzeugte Flußwinkel γₛₚ wird mittels des Umschalters 54 als Flußwinkel γₛ dem Addierer 48 zugeführt, so daß alle 60° el. an der Recheneinheit die ermittelte Lage αᵤ des Stellgrößen-Raumzeigers uₛ ansteht. Somit ändern sich auch die Ansteuersignale S₁,...,S₆ nur alle 60° el., so daß die Synchronmaschine mit einem blockförmigen Strom gespeist wird.

Der Umschalter 54 wird mittels eines Steuersignals S_{B} gesteuert. Dieses Steuersignal S_{B} kann beispielsweise in Abhängigkeit einer ermittelten Ständerfrequenz ωₛ und einer Grenzfrequenz ω_{gr} ermittelt werden. Dabei kann das Steuersignal S_{B} im Bereich 0 ≤ ωₛ **≤** ω_{gr} oder im Bereich ω_{gr} ≤ ωₛ ≤ ωₘₐₓ den Pegel 1 annehmen. Im erstgenannten Bereich könnte die Ermittlung der Ständerfrequenz ωₛ mit Schwierigkeiten behaftet sein, da nur ein einfacher Polradlagergeber verwendet wird. Im zweitgenannten Bereich sind die Schwierigkeiten nicht mehr vorhanden. Sobald die Ständerfrequenz ωₛ gleich der Grenzfrequenz ω_{gr} ist, wechselt das Steuersignal S_{B} seinen Pegel, wodurch der Umschalter 54 beispielsweise vom Ausgang der Vorrichtung 52 auf den Ausgang des Winkelintegrators 46 geschaltet wird. Durch diese Umschaltung wird der Recheneinheit 50 eine sich stetig ändernde Lage αᵤ des Stellgrößen-Raumzeigers uₛ zugeführt. Dadurch werden die Ansteuersignale S₁, ... S₆, in Abhängigkeit der Pulsfrequenz neu berechnet. Somit wird die Synchronmaschine mit einem sinusförmigen Strom gespeist.

Durch die sprungförmige Änderung des Flußwinkels γₛₚ können unter Umständen dynamische Stellgrößen auf die Stromregler 26 und 28 einwirken. Um diese dynamische Störgrößen zu reduzieren, kann die Vorrichtung 52 außerdem einen Filter ersten Ordnung aufweisen, mit der eine beliebige Zeitfunktion realisiert werden kann.

Damit das Drehmoment während der Umschaltung von Block- auf Sinusstromspeisung und umgekehrt konstant gehalten werden kann, muß die Amplitude des Strom-Raumzeigers iₛ beim Sinusstrom gegenüber der Blockstromamplitude angepaßt werden. Dies wird über eine Anpassung der drehmomentbildenden Soll-Stromkomponente i^{*}_{sq} realisiert. Dazu ist dem nichtinvertierenden Eingang des Vergleichers 22 des Stromregelkreises 12 eine Anpaßvorrichtung 56 vorgeschaltet, der das Steuersignal S_{B} zugeführt ist. Bei dieser Anpaßvorrichtung 56 handelt es sich beispielsweise um zwei Konstantglieder, zwischen denen abhängig vom Steuersignal S_{B} umgeschaltet werden kann. Da das Drehmoment bei Blockstromspeisung um ca. 10% größer ist als bei Sinusspeisung muß die Amplitude der drehmomentbildenden Soll-Stromkomponente i^{*}_{sq} bei Blockstromspeisung erniedrigt werden. Dazu wird von einem Konstantglied mit dem Faktor 1 auf ein anderes Konstantglied mit einem Faktor beispielsweise 0,95 umgeschaltet.

Da beim Einsatzpunkt der Feldschwächung die Synchronmaschine mit einem Sinusstrom gespeist wird, erübrigt sich das in der WO 94/0731 vorgestellte Verfahren zur Feldschwächung einer permanenterregten Synchronmaschine. Bei dieser Zweikomponenten-Stromregelung läßt sich das Verfahren der Spannungsbegrenzung gemäß der EP 0 633 653 A1 anwenden. Dazu ist ein Übersteuerungs-Regler 58 vorgesehen, der eingangsseitig einen Vergleicher 60 und ausgangsseitig einen PI-Regler 62 mit nachgeschaltetem Begrenzer 64 aufweist. Am invertierenden Eingang des Vergleichers 60 steht die Betragskomponente |uₛ| des Stellgrößen-Raumzeigers uₛ an, wogegen an seinem nichtinvertierenden Eingang ein Maximalwert u_{s,lim} (z.B. die speisende Gleichspannung) ansteht. Solange die Betragskomponente |uₛ| kleiner ist als der vorgegebene Maximalwert u_{s,lim} ist, also im Grunddrehzahlbereich, wird der Reglerausgang so begrenzt, daß er keine Werte für die flußbildende Soll-Stromkomponente i^{*}_{sd} vorgeben kann (Figur 7 bzw. Figur 8). Geht die Drehzahl über den Grunddrehzahlbereich hinaus, so gibt der Übersteuerungs-Regler 58 die flußbildende Soll-Stromkomponente i^{*}_{sd} so vor, daß die Betragskomponente |uₛ| des Stellgrößen-Raumzeigers uₛ konstant auf dem Maximalwert u_{s,lim} gehalten wird (Figur 4 bzw. Figur 5).

Die drehmomentbildende Stromkomponente i^{*}_{sq} wird von einer übergeordneten Drehzahlregelung, die aus Übsichtlichkeitsgründen nicht näher dargestellt ist, bestimmt. Damit im Feldschwächbereich die Amplitude des Strom-Raumzeigers iₛ einen Maximalstrom i_{s,lim} des Pulswechselrichters nicht überschreitet, ist vorteilhaft, diese drehmomentbildende Soll-Stromkomponente i^{*}_{sq} mittels eines Begrenzer 66 zu begrenzen. Dieser Begrenzers 66 wird von einer Vorrichtung 68 zur Begrenzung des Grenzwertes i_{sq,lim} für die drehmomentbildende Soll-Stromkomponente i^{*}_{sq} betätigt.

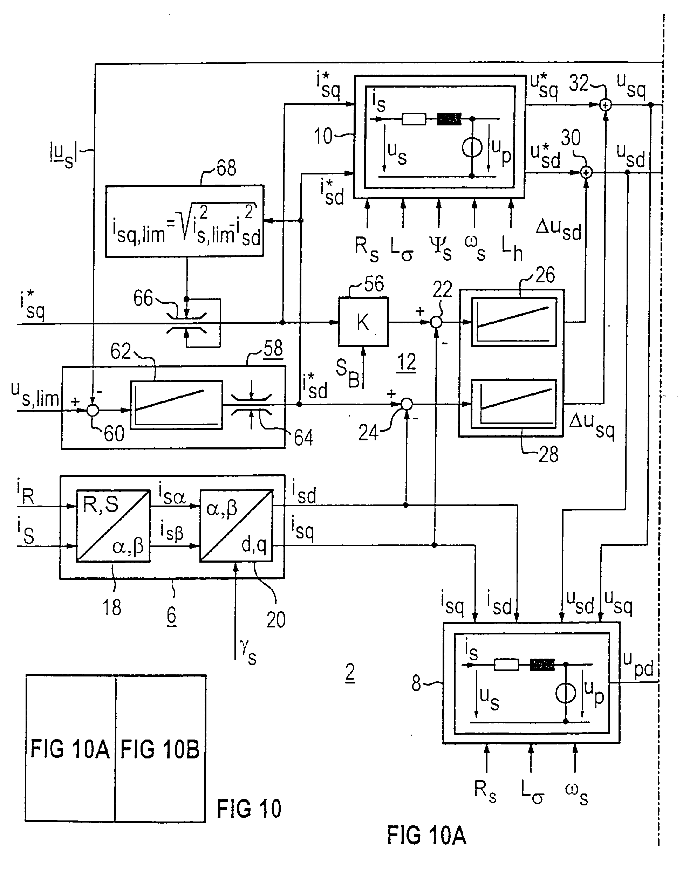

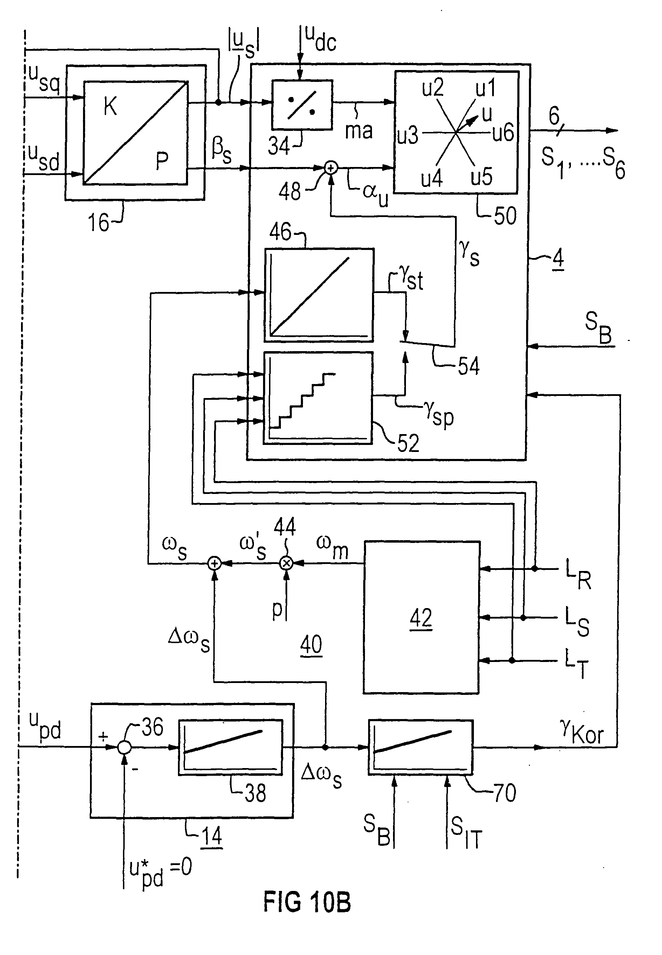

In der Figur 10 ist ein Blockschaltbild einer weiteren vorteilhaften Ausführungsform der Vorrichtung zur Durchführung des erfindungsgemäßen Verfahrens dargestellt. Dieses Blockschaltbild unterscheidet sich vom Blockschaltbild gemäß Figur 9 durch den Integrator 70, der eingangsseitig mit dem Ausgang der EMK-Regelung 14 verbunden ist. Ausgangsseitig ist dieser Integrator 70 mit der Vorrichtung 52 zur Ermittlung eines sich sprungförmig ändernden Flußwinkels γₛₚ des Raumzeiger-Modulators 4 verknüpft. Mittels diesem Integrator 70 wird ein Winkel γ_{Kor} aus der Korrekturfrequenz Δωₛ ermittelt. Dieser Korrekturwinkel γ_{Kor} wird dem Flußwinkel γₛₚ aufaddiert. Um kleinste Fehler in der Frequenzermittlung zu kompensieren, die ein Weglaufen dieses Integrators 70 bewirken würde, ist es vorteilhaft, daß die Integrationszeit begrenzt werden kann. Dies wird mit dem Signal S_{IT} bewerkstelligt. Die EMK-Regelung 14 korrigiert beim Übergang von Blockstromspeisung auf Sinusstromspeisung eine eventuelle Fehlorientierung, die durch einen Justierfehler oder den Toleranzen des Polradlagegebers verursacht worden sind. Daraus wird der Korrekturwinkel γ_{Kor} ermittelt, der bei Blockstromspeisung den Strom-Raumzeiger iₛ verdreht. Somit ist gewährleistet, daß selbst bei Fehljustierungen des Polradlagegebers das Drehmoment beim Übergang konstant bleibt.

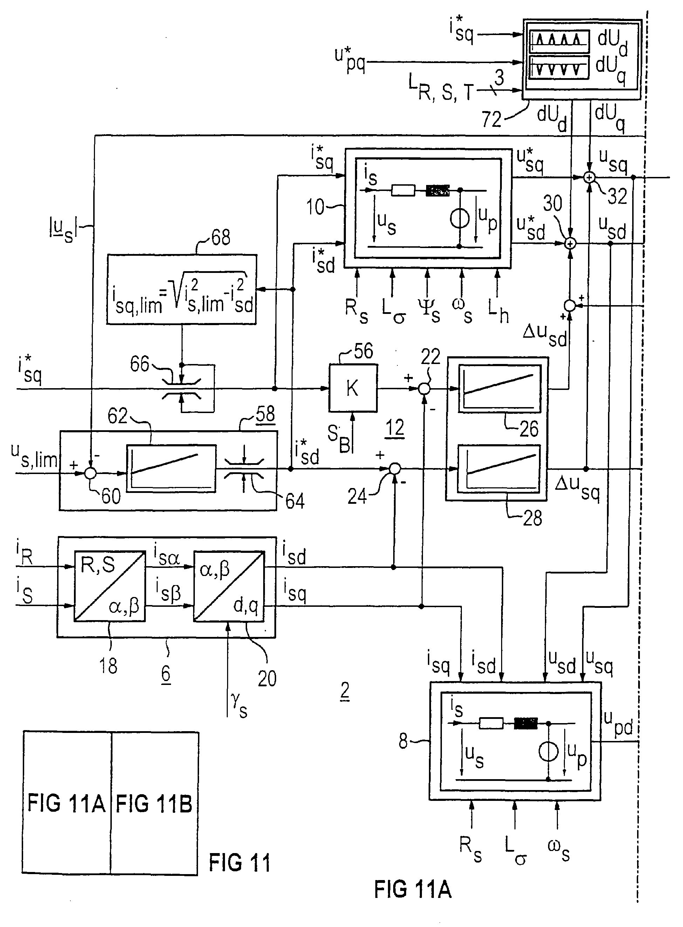

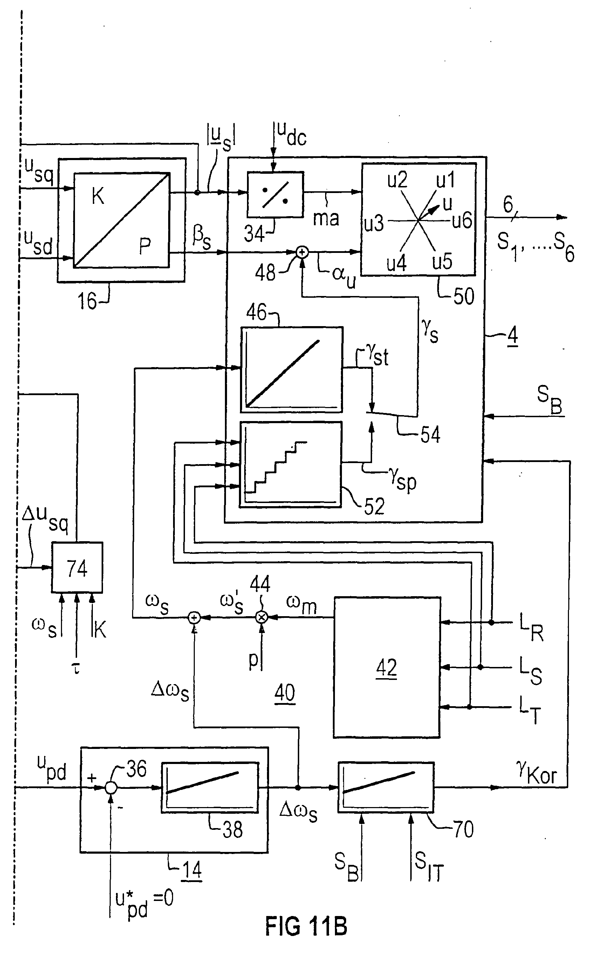

In der Figur 11 ist ein Blockschaltbild einer weiteren vorteilhaften Vorrichtung zur Durchführung des erfindungsgemäßen Stromregelverfahrens dargestellt. Dieses Blockschaltbild unterscheidet sich vom Blockschaltbild gemäß Figur 10 dadurch, daß eine Vorrichtung 72 zur Erzeugung dynamischer Vorsteuergrößen dU_{d} und dU_{q} ein Querzweig 74 vorgesehen sind. Die Vorrichtung 72 ist ausgangsseitig mit den Addierern 30 und 32 verbunden. Der Querzweig 74 ist eingangsseitig mit dem Ausgang des Stromreglers 28 und ausgangsseitig mittels eines Addierers 76 mit dem Ausgang des Stromreglers 26 verknüpft. Dem Querzweig 74 sind Koeffizienten τ (Zeitkonstante) und k (Verstärkungsfaktor) und die Ständerfrequenz ωₛ zugeführt. Der Aufbau und die Funktionsweise dieses Querzweiges 74 ist in der EP 0 633 653 A1 ausführlich beschrieben, so daß an dieser Stelle nicht näher darauf eingegangen werden muß.

Der Vorrichtung 72 werden die drehmomentbildende Soll-Stromkomponente i^{*}_{sq}, die Soll-q-Komponente u^{*}_{pq} der Polradspannung uₚ und die Lagesignale L_{R,S,T} zugeführt. Wie bereits erwähnt, wird im Blockstrombetrieb der Rotorflußzeiger um 60°, getriggert durch die Lagesignale L_{R,S,T}, mittels der feldorientierten Zweikomponenten-Stromregelung 2 gedreht. Wegen der Regelbewegungen der Stromregler 26 und 28 und ihrer realisierbaren endlichen Regelverstärkungen sind Einbrüche in Stromistwerten nicht vermeidbar. Durch die Aufaddierung von dynamischen Vorsteuergrößen dU_{d} und dUq auf die Regler-Stellgrößen Δu_{sd} und Δu_{sq} können diese Stromeinbrüche alle 60° el. reduziert bzw. vermieden werden. Damit die entsprechenden Vorsteuergrößen dU_{d} und dUq erzeugt werden, benötigt diese Vorrichtung 72 die drehmomentbildende Soll-Stromkomponente i*_{sq} und die Polradspannnung uₚ = u^{*}_{sq}. Getriggert wird dieses Vorrichtung 72 durch die Lagesignale L_{R,S,T}. Die dynamische Vorsteuergröße dUq erhöht die Spannung, die zur Kommutierung notwendig ist, wobei die dynamische Vorsteuergröße dU_{d} aufgrund des stetig drehenden EMK-Zeigers uₚ (Polradspannung) in dem für 60° stillstehenden d-/q-Koordinatensystem sich ergibt. Die Amplitude dieser Zeitfunktion wird bestimmt durch die Amplitude der Polradspannung uₚ projiziert in die d-Achse.

Mit dieser feldorientierten Regelung 2 mit einem Raumzeiger-Modulator 4 wird das erfindungsgemäße Stromregelverfahren realisiert, mit dem eine permanenterregte Synchronmaschine mit trapezförmiger EMK, mit Blockstrom- und Sinusstrom gespeist wird. Dadurch bleiben die Vorteile der Blockstromspeisung im niedrigen Drehzahlbereich erhalten, wodurch im oberen Drehzahlbereich die Vorteile der Sinusstromspeisung zum Tragen kommen. Somit werden die eingangs aufgezeigten Nachteile vermieden und man erhält über den gesamten Drehzahlbereich ein konstantes Drehmoment.

## Patentansprüche

1. Verfahren zur Stromregelung einer feldorientiert betriebenen, permanenterregten Synchromaschine mit trapezförmiger EMK, wobei eine flußbildende Ist-Stromkomponente (i_{sd}) und eine drehmomentbildende Ist-Stromkomponente (i_{sq}) jeweils auf eine Soll-Stromkomponente (i^{*}_{sd}, i^{*}_{sq}) geregelt werden, wobei jeweils eine Regler-Stellgröße (Δu_{sd}, Δu_{sq}) mit einer Vorsteuergröße (u^{*}_{sd}, u^{*}_{sq}) überlagert wird, wobei diese gebildeten Stellgrößenkomponenten (u_{sd}, u_{sq}) in polare Stellgrößenkomponenten (|uₛ|, βₛ) gewandelt werden, characterisiert **dadurch** daß in Abhängigkeit von Lagesignalen (L_{R,S,T}) einerseits ein sich sprungförmig ändernder Flußwinkel (γₛₚ) und andererseits mittels einer ermittelten Ständerfrequenz (ωₛ) ein sich stetig ändernder Flußwinkel (γₛₜ) ermittelt wird, wobei im niedrigen Drehzahlbereich aus dem sich sprungförmig ändernden Flußwinkel (γₛₚ) und im übrigen Drehzahlbereich aus dem sich stetig ändernden Flußwinkel (γₛₜ) mittels der feldorientierten Lage (βₛ) eine ständerorientierte Lage (αᵤ) der Anstellgrößen (uₛ) bestimmt wird und wobei aus diesen ständerorientierten Stellgrößenkomponenten (|uₛ|, αᵤ) Ansteuersignale (S₁,...,S₆) für den Pulswechselrichter der feldorientiert betriebenen, permanenterregten Synchronmaschine generiert werden.

2. Verfahren nach Anspruch 1, wobei der sich sprungförmig ändernde Flußwinkel (γₛₚ) mit einer vorgebbaren Zeitfunktion verzögert wird.

3. Verfahren nach Anspruch 1, wobei der ermittelten Ständerfrequenz (ω'ₛ) eine Korrekturfrequenz (Δωₛ) aufgeschaltet wird, die in Abhängigkeit einer Ist-d-Komponente (u_{pd}) eines aus feldorientierten Strom- und Spannungskomponenten (i_{sd}, i_{sq}, u_{sd}, u_{sq}), Maschinenparametern (L_{σ}, Rₛ) und der korrigierten Ständerfrequenz (ωₛ) ermittelten Polradspannung (uₚ) mittels einer Soll-d-Komponente (u^{*}_{pd}) bestimmt ist.

4. Verfahren nach Anspruch 1 und 3, wobei beim Übergang vom niedrigen in den übrigen Drehzahlbereich eine Korrekturfrequenz (Δωₛ) ermittelt wird, aus der mittels Integration ein Korrekturwinkel (γ_{Kor}) ermittelt wird, der während des niedrigen Drehzahlbereichs den sich sprungförmig ändernden Flußwinkel (γₛₚ) überlagert wird.

5. Verfahren nach Anspruch 1, wobei bei Überschreitung der ermittelten Betragskomponente (|uₛ|) des Stellgrößen-Raumzeigers (uₛ) über einen Maximalwert (u_{s,lim}) die flußbildende Soll-Stromkomponente (i^{*}_{sd}) so vorgegeben wird, daß die Betragskomponente (|uₛ|) gleich dem Maximalwert (u_{s,lim}) bleibt.

6. Verfahren nach Anspruch 5, wobei die drehmomentbildende Soll-Stromkomponenten (i*_{sq}) derart begrenzt wird, daß der Betrag des Strom-Raumzeigers (iₛ) einen Maximalwert (i_{sq,lim}) nicht überschreitet.

7. Verfahren nach Anspruch 1, wobei den Regler-Stellgrößen (Δu_{sd}, Δu_{sq}) zusätzlich dynamische Vorsteuergrößen (dU_{d}, dU_{q}) aufaddiert werden, die in Abhängigkeit von der drehmomentbildenden Soll-Stromkomponente (i^{*}_{sq}), von den Lagesignalen (L_{R,S,T}) und der Polradspannung (u^{*}_{pd}) ermittelt werden.

8. Verfahren nach Anspruch 1, wobei die drehmomentbildende Regler-Stellgröße (Δu_{sq}) in Abhängigkeit einer Frequenzgröße (τkωₛ) verzögert auf die flußbildende Regler-Stellgröße (Δu_{sd}) einwirkt.

9. Verfahren nach Anspruch 8, wobei die Koeffizienten (τ, k) der Frequenzgröße (τkωₛ) in Abhängigkeit der Ständerfrequenz (ωₛ) verändert werden.

10. Vorrichtung zur Durchführung des Stromregelverfahrens nach Anspruch 1 mit einer feldorientierten Regelung (2) und einem Raumzeiger-Modulator (4) für einen eine permanenterregte Synchromaschine mit trapezförmiger EMK speisenden Pulswechselrichter, wobei diese feldorientierte Regelung (2) eine eingangsseitige Transformationseinrichtung (6) einen EMK-Rechner (8), ein Vorsteuernetzwerk (10), einen Stromregelkreis (12) und einen ausgangsseitigen Koordinatenwandler (16) aufweist, wobei der eingangsseitigen Transformationseinrichtung (6) gemessene Phasenströme (i_{R}, i_{S}) zugeführt werden, deren Ausgänge einerseits mit dem Stromregelkreis (12) und andererseits mit dem EMK-Rechner (8) verknüpft sind, wobei die Ausgänge des Vorsteuernetzwerkes (10) und des Stromregelkreises (12) miteinander verknüpft und mit dem Eingang des ausgangsseitigen Koordinatenwandlers (16) verbunden sind, der dem nachgeschalteten Raumzeiger-Modulator (4) polare Stellgrößenkomponenten (|uₛ|, αᵤ) zuführt, wobei dieser Raumzeiger-Modulator (4) außerdem einerseits mit einer Einrichtung (40) zur Ermittlung der Ständerfrequenz (ωₛ) verbunden ist, an deren Eingänge Lagesignale (L_{R,S,T}) eines Lagegebers anstehen, und andererseits direkt mit dem Lagegeber verbunden ist, charakterisiert **dadurch,** daß dieser Raumzeiger-Modulator (4) jeweils mittels einer Vorrichtung (46,52) aus der Ständerfrequenz (ωₛ) einen sich stetig ändernden Flußwinkel (γₛₜ) und aus den Lagesignalen (L_{R,S,T}) einen sich sprungförmig ändernden Flußwinkel (γₛₚ) ermittelt, von denen einer mittels eines Umschalters (54) mittels eines Addierers (48) des Raumzeiger-Modulators (4) der Winkelkomponente (βₛ) der polaren Stellgröße (|uₛ|, βₛ) aufaddiert wird, wobei dieser Umschalter (54) in Abhängigkeit eines drehzahlabhängigen Steuersignales (S_{B}) betätigt wird.

11. Vorrichtung nach Anspruch 10, wobei der Vorrichtung (52) zur Bildung des Flußwinkels (γₛₚ) ein Verzögerungsglied nachgeschaltet ist.

12. Vorrichtung nach Anspruch 10, wobei dem EMK-Rechner (8) eine EMK-Regelung (14) für die d-Komponente (u*_{pd}) der Polradspannung (uₚ) nachgeschaltet ist, deren Ausgang mit dem Ausgang der Einrichtung (40) zur Ermittlung der Ständerfrequenz (ω'ₛ) verbunden ist.

13. Vorrichtung nach Anspruch 12, wobei der Ausgang der EMK-Regelung (14) mit einem Integrator (70) verbunden ist, dessen Ausgang mit der Vorrichtung (52) zur Bildung des Flußwinkels (ωₛₚ) des Raumzeiger-Modulators (4) verknüpft ist.

14. Vorrichtung nach Anspruch 10, wobei ein Übersteuerungs-Regler (58) vorgesehen ist, an dessen Solleingang ein Maximalwert (u_{s,lim}) und am Isteingang eine Betragskomponente (|uₛ|) der polaren Stellgröße (|uₛ|, βₛ) anstehen und wobei dieser Übersteuerungs-Regler (58) ausgangsseitig jeweils mit einem Eingang für die flußbildende Soll-Stromkomponente (i*_{sd}) des Vorsteuernetzwerkes (10) und des Stromregelkreises (12) verbunden ist.

15. Vorrichtung nach Anspruch 10 und 14, wobei dem Eingang für die drehmomentbildende Soll-Stromkomponente (i*_{sq}) des Vorsteuernetzwerkes (10) und des Stromregelkreises (12) ein Begrenzer (66) vorgeschaltet ist, der mit einer Vorrichtung (68) zur Berechnung des Grenzwertes gesteuert wird und wobei eingangsseitig diese Vorrichtung (68) mit dem Ausgang des Übersteuerungs-Reglers (58) verbunden ist.

16. Vorrichtung nach Anspruch 10, wobei die Ausgänge des Stromregelkreises (12) mit Ausgängen einer Vorrichtung (72) zur Erzeugung von dynamischen Vorsteuergrößen (dU_{d}, dU_{q}) verbunden sind, an deren Eingänge eine drehmomentbildende Soll-Stromkomponente (i^{*}_{sq}), eine Soll-d-Komponente (u^{*}_{pq}) der Polradspannung (uₚ) und die Lagesignale (L_{R,S,T}) anstehen.

17. Vorrichtung nach Anspruch 10, wobei der Ausgang des q-Stromreglers (28) mittels eines Querzweiges (74), an dessen zweiten Eingang die Ständerfrequenz (ωₛ) ansteht, mit dem Ausgang des d-Stromreglers (26) des Stromregelkreises (12) verknüpft ist.

18. Vorrichtung nach einem der vorgenannten Ansprüche 10 bis 17, wobei die feldorientierte Regelung (2) wenigstens einen Mikroprozessor und der Raumzeiger-Modulator (4) ebenfalls einen Mikroprozessor aufweist.

## Claims

1. Method for current control of a permanently excited field-oriented controlled synchronous machine with trapezoidal e.m.f, with a flux-generating actual current component (i*_{sd}*) and a torque-generating actual current component (i*_{sq}*) being controlled on a target current component (i^{*}*_{sd}*, i^{*}*_{sq}*) in each instance, with a controller actuating variable (Δu*_{sd}* , Δu*_{sq}*) being superimposed in each instance with a precontroller variable (u^{*}*_{sd}*, u^{*}*_{sq}*), with these formed actuating variable components (u*_{sd}*, u*_{sq}*) being converted into polar actuating variable components (|*uₛ*|,*βₛ*), **characterised in that** as a function of position signals (L*_{R,S,T}*), a suddenly changing flux angle (γ*ₛₚ*) is determined on the one hand and a continuously changing flux angle (*γₛₚ*) is determined on the other hand by means of a determined stator frequency, with a stator-oriented position (α*ₙ*) of the start variables (*u*ₛ) being determined in the low speed range from the suddenly changing flux angle *(γₛₚ)* and in the remaining speed range from the constantly changing flux angle by means of the field-oriented position (β*ₛ*) and with control signals (S₁, ... S₆) for the pulse converter of the field-oriented controlled permanently-excited synchronous machine being generated from these stator oriented actuating variable components (|u*ₛ*|, α*ᵤ*).

2. Method according to claim 1, with the sudden changing flux angle (*γₛₚ*) being delayed with a predeterminable function of time.

3. Method according to claim 1, with a correction frequency (ω*ₛ*) being applied to the determined stator frequency (ω*ₛ*), said correction frequency being determined as a function of an actual d component (u*_{pd}*) of a magnet wheel voltage (up) determined from field-oriented current and voltage components (i*_{sd}*, *i_{sq}*, *u_{sd}*, *u_{sq}*), machine parameters (L_{σ}R*ₛ*) and the corrected stator frequency (ω*ₛ*) by means of an actual d component (u^{*}*_{pd}*).

4. Method according to claim 1 and 3, with a correction frequency (Δω*ₛ*) being determined during the transition from the low speed range into the remaining speed range, from which correction frequency a correction angle (*γ_{Kor}*) is determined by means of integration, said correction angle being superimposed on the suddenly changing flux angle (*γₛₚ*) during the low speed range.

5. Method according to claim 1, with the flux-generating target current component (i*^{*}_{sd}*) being predetermined when the determined amount component (|*uₛ*|) of the actuating variable space vector (*uₛ*) exceeds a maximum value (u_{*s*,lim}) such that the amount component (|*u*ₛ|) remains identical to the maximum value (u_{s,lim}).

6. Method according to claim 5, with the torque-generating target current component (i^{*}*_{sd}*) being restricted such that the amount of the current space vector (*iₛ*) does not exceed a maximum value (u_{*sq*,lim}).

7. Method according to claim 1, with additional dynamic precontroller variables (dU*_{d}*, dU*_{q}*) being added to the controller actuating variables (*Δu_{sd}, Δ_{sq}*), said precontroller variables being determined as a function of the torque-generating target current component (i^{*}*_{sq}*), of the position signals (L*_{R,S,T}*) and the magnet wheel voltage (*u^{*}_{pd}*).

8. Method according to claim 1, with the torque-generating controller actuating variable (Δu*_{sq}*) acting on the flux-generating control actuating variable (Δu*_{sd}*) in a delayed fashion as a function of a frequency variable (τ*k*ω*ₛ*).

9. Method according to claim 8, with the coefficients *(τ,k)* of the frequency variable (τ*k*ω*ₛ*) being changed as a function of the stator frequency (ω*ₛ*).

10. Device for implementing the current control method according to claim 1 with a field-oriented controller (2) and a space vector modulator (4) for a pulse inverter supplying a permanently-excited synchronous machine having a trapezoidal e.m.f., with this field-oriented controller (2) comprising an input-side transformation facility (6), an e.m.f controller (8), a precontroller network (10), a current control circuit (12) and a coordinate converter (16) arranged on the output side, with measured phase currents (i*_{R}*, i*_{S}*) being supplied to the input-side transformation facility (6), the outputs of which are linked on the one hand to the current control circuit (12) and on the other hand to the e.m.f controller (8), with the outputs of the precontroller network (10) and the current control circuit (12) being linked to one another and being connected to the input of the output side coordinate converter (16), which supplies polar actuating variable components (|*uₛ*|,α*ᵤ*) to the space vector modulator (4) arranged downstream thereof, with this space vector modulator (4) also being connected on the one hand to a device (40) for determining the stator frequency (ω*ₛ*), on the inputs of which position signals *(*L*_{R,S,T})* of a position sensor are present and are directly connected on the other hand to the position sensor, **characterized in that** this space vector modulator (4) determines a constantly changing flux angle (*γₛₜ*) from the stator frequency by means of a device in each instance and determines a suddenly changing flux angle *(γₛₚ)* from the position signals (L*_{R,S,T}),* from which one of the polar actuating variables is added to the angle components (β*ₛ*) by means of a converter (54) by means of an adder (48) of the space vector modulator (4), with this converter (54) being actuated as a function of a speed-dependent control signal (S*_{B}*).

11. Device according to claim 10, with a delay element being arranged downstream of the device (52) in order to form the flux angle *(γₛₚ).*

12. Device according to claim 10, with an e.m.f controller (14) for the d-components (u^{*}*_{pd}*) of the magnet wheel voltage (*uₚ*) being arranged downstream of the e.m.f controller (8), the output of which is connected to the output of the device (40) for determining the stator frequency (ω*ₛ*).

13. Device according to claim 12, with the output of the e.m.f controller (14) being connected to an integrator (70), the output of which is linked to the device (52) for forming the flux angle (ω*ₛₚ*) of the space vector modulator (4).

14. Device according to claim 10, with an overcontroller (58) being provided, at the target input of which is present a maximum value (u_{s,lim}) and at the actual input of which is present an amount component (|uₛ|) of the polar actuating variable (|uₛ|, β*ₛ*)*,* and with this overcontroller (58) being connected on the output side to an input for the flux-generating target current component *(i^{*}_{sd})* of the precontroller network (10) and of the current control circuit (12) in each instance.

15. Device according to claim 10 and 14, with a limiter (66) being arranged upstream of the input for the torque-generating target current component (*i*^{*}*_{sq}*) of the precontroller network (10) and of the current control circuit (12), said limiter being controlled with a device (68) for calculating the limit value and with this device (68) being connected to the output of the overcontroller control (58) on the input side.

16. Device according to claim 10, with the outputs of the current control circuit (12) being connected to outputs of a device (72) for generating dynamic precontroller variables (dU*_{d}*,dU*_{q}*), at the inputs of which are present a torque-generating target current component (*i*^{*}_{sq}), a target d component (*u^{*}_{pq}*) of the magnet wheel voltage (u*ₚ*) and the position signals (L_{*R*,*S*,*T*}).

17. Device according to claim 10, with the output of the q-controller (28) being linked to the output of the d-current controller (26) of the current control circuit (12) by means of a shunt arm (74), at the second input of which is present the stator frequency (ω*ₛ*).

18. Device according to one of the preceding claims 10 to 17, with the field-oriented controller (2) comprising at least a microprocessor and the space vector modulator (4) likewise comprising a microprocessor.

## Revendications

1. Procédé pour la régulation de courant d'une machine synchrone commandée à champ orienté et excitée en permanence avec f.e.m. trapézoïdale, une composante de courant réelle (i_{sd}) formant le flux et une composante de courant réelle (i_{sq}) formant le couple étant réglées respectivement sur une composante de courant de consigne (i^{*}_{sd}, i^{*}_{sq}), à chaque fois une grandeur de commande de régulateur (Δu_{sd}, Δu_{sq}) étant superposée avec une valeur pilote (u^{*}_{sd}, u^{*}_{sq}), ces composantes de grandeur de commande (u_{sd}, u_{sq}) formées étant converties en composantes de grandeurs de réglage (|uₛ|, βₛ) polaires, **caractérisé en ce que**, en fonction de signaux de position (L_{R}, _{S, T}), on détermine d'une part un angle de flux (γₛₚ) variant brusquement et d'autre part au moyen d'une fréquence de stator (ωₛ) déterminée un angle de flux (γₛₜ) variant continûment, une position (αᵤ) orientée au niveau du stator des grandeurs de commande (uₛ) étant déterminée dans la basse plage de vitesses de rotation à partir de l'angle de flux (γₛₚ) changeant brusquement et dans la plage de vitesses de rotation restante à partir de l'angle de flux (γₛₜ) changeant continûment au moyen de la position (βₛ) à champ orienté et des signaux d'activation (S₁,..., S₆) pour l'onduleur à impulsions de la machine synchrone commandée par champ orienté et excitée en permanence étant générés à partir de ces composantes de grandeur de commande (|uₛ|, αᵤ) à stator orienté.

2. Procédé selon la revendication 1, l'angle de flux (γₛₚ) variant brusquement étant retardé avec une fonction de temps prédéfinissable.

3. Procédé selon la revendication 1, la fréquence de stator (ω*ₛ) déterminée étant étendue par une fréquence de correction (Δωₛ), qui est déterminée en fonction d'une composante d réelle (u_{pd}) d'une tension de rotor (uₚ) déterminée à partir de composantes de courant et de tension (i_{sd}, i_{sq}, u_{sd}, u_{sq}) à champ orienté, de paramètres de machine (L_{σ}, Rₛ) et de la fréquence de stator corrigée (ωₛ) au moyen d'une composante d de consigne (u*_{pd}).

4. Procédé selon les revendications 1 et 3, une fréquence de correction (Δωₛ) étant déterminée lors du passage de la basse plage de vitesses de rotation dans la plage restante, fréquence à partir de laquelle on détermine par intégration un angle de correction (γ_{Kor}) qui est superposé pendant la basse plage de vitesses de rotation aux angles de flux (γₛₚ) changeant brusquement.

5. Procédé selon la revendication 1, dans lequel, en cas de dépassement d'une valeur nominale (u_{s, lim}) par la composante de norme (|uₛ|) déterminée du pointeur d'espace de grandeur de commande (uₛ), la composante de courant de consigne (i*_{sd}) formant le flux est prédéfinie de telle sorte que la composante de norme (uₛ), reste égale à la valeur maximale (uₛ, lim).

6. Procédé selon la revendication 5, la composante de courant de consigne (i*_{sq}) formant le couple étant limitée de telle sorte que la norme du pointeur d'espace de courant (iₛ) ne dépasse pas une valeur maximale (i_{sq,lim}).

7. Procédé selon la revendication 1, des grandeurs pilotes dynamiques (dU_{d}, dUq), qui sont déterminées en fonction de la composante de courant de consigne (i*_{sq}) formant le couple, des signaux de position (L_{R,S,T}) et de la tension du rotor (u*_{pd}), étant ajoutées en supplément aux grandeurs de consigne du régulateur (Δu_{sd}, Δu_{sq}).

8. Procédé selon la revendication 1, la grandeur de commande de régulateur (Δu_{sq}) formant le couple agissant en fonction d'une grandeur de fréquence (τkωₛ) de façon retardée sur la grandeur de commande du régulateur (Δu_{sd}) formant le flux.

9. Procédé selon la revendication 8, les coefficients (τ, k) de la grandeur de fréquence (τkωₛ) étant modifiés en fonction de la fréquence de stator (ωₛ).

10. Dispositif pour la mise en oeuvre du procédé de régulation de courant selon la revendication 1 avec une régulation (2) à champ orienté et un modulateur de pointeur d'espace (4) pour un onduleur à impulsions alimentant une machine synchrone à excitation permanente avec f.e.m. trapézoïdale, cette régulation (2) à champ orienté présentant un dispositif de transformation (6) côté entrée, un calculateur de f.e.m. (8), un réseau pilote (10), un circuit régulateur de courant (12) et un convertisseur de coordonnées (16) côté sortie, des courants de phase (i_{R}, i_{S}) mesurés étant amenés au dispositif de transformation (6) côté entrée, dont les sorties sont connectées d'une part au circuit régulateur de courant (12) et d'autre part au calculateur de f.e.m., les sorties du réseau pilote (10) et du circuit régulateur de courant (12) étant connectées entre elles et étant reliées à l'entrée du convertisseur de coordonnées (6) côté sortie, lequel amène des composantes de grandeur de commande (|uₛ|, αᵤ) polaires au modulateur de pointeur d'espace (4) monté en aval, ce modulateur de pointeur d'espace (4) étant relié également d'une part à un dispositif (40) pour la détermination de la fréquence de stator (ω'ₛ), sur les entrées duquel des signaux de position (L_{R, S, T}) d'un capteur de position sont appliqués, et étant relié directement au capteur de position, **caractérisé en ce que** ce modulateur de pointeur d'espace (4) détermine à chaque fois au moyen d'un dispositif (46, 52) à partir de la fréquence de stator (ω'ₛ) un angle de flux (γₛₜ) changeant continûment et à partir des signaux de position (L_{R,S,T}) un angle de flux (γₛₜ) changeant brusquement, dont l'un est ajouté au moyen d'un inverseur (54) par l'intermédiaire d'un additionneur (48) du modulateur de pointeur d'espace (4) à la composante d'angle (βₛ) de la grandeur de commande polaire (|uₛ|, βₛ), cet inverseur (54) étant actionné en fonction d'un signal de commande (S_{B}) dépendant de la vitesse de rotation.

11. Dispositif selon la revendication 10, un élément de temporisation étant monté en aval du dispositif (52) pour former l'angle de flux (γₛₜ).

12. Dispositif selon la revendication 10, une régulation de f.e.m. (14) pour la composante d (u*_{pd}) de la tension de rotor (uₚ) étant montée en aval du calculateur de f.e.m. (8), dont la sortie est reliée à la sortie du dispositif (40) pour la détermination de la fréquence de stator (ω'ₛ).

13. Dispositif selon la revendication 12, la sortie de la régulation de f.e.m. (14) étant reliée à un intégrateur (70), dont la sortie est connectée au dispositif (52) pour la formation de l'angle de flux (ωₛₚ) du modulateur de pointeur d'espace (4).

14. Dispositif selon la revendication 10, un régulateur de saturation (58) étant prévu, sur l'entrée de consigne et l'entrée réelle duquel sont appliquées respectivement une valeur maximale (u_{s, lim}) et une composante de norme (|uₛ|) de la grandeur de réglage de commande polaire (|uₛ|, βₛ) et ce régulateur de saturation (58) étant relié côté sortie respectivement à une entrée pour la composante de courant de consigne (i*_{sd}), formant le flux, du réseau pilote (10) et du circuit régulateur de courant (12).

15. Dispositif selon les revendications 10 et 14, un limiteur (66) étant monté en amont de l'entrée pour la composante de courant de consigne (i*_{sq}), formant le couple, du réseau pilote (10) et du circuit régulateur de courant (12), lequel limiteur est commandé avec un dispositif (68) pour le calcul de la valeur limite et ce dispositif (68) étant relié côté entrée à la sortie du régulateur de saturation (58).

16. Dispositif selon la revendication 10, les sorties du circuit régulateur de courant (12) étant reliées à des sorties d'un dispositif (72) pour générer des grandeurs pilotes (dU_{d}, dUq) dynamiques, sur les entrées duquel sont appliqués une composante de courant de consigne (i*_{sq}) formant le couple, une composante d de consigne (u*_{pq}) de la tension du rotor (uₚ) et les signaux de position (L_{R,S,T}).

17. Dispositif selon la revendication 10, la sortie du régulateur de courant q (28) étant connectée au moyen d'une branche transversale (74), à la seconde entrée de laquelle s'applique la fréquence de stator (ω*ₛ), avec la sortie du régulateur de courant d (26) du circuit régulateur de courant (12).

18. Dispositif selon l'une quelconque des revendications 10 à 17 précédentes, la régulation (2) à champ orienté présentant au moins un microprocesseur et le modulateur de pointeur d'espace (4) présentant également un microprocesseur.
